# FASCICULE DE BREVET EUROPEEN

(11) **EP 0 581 654 B1**
(45) Date de publication et mention de la délivrance du brevet: **04.02.1998**
(21) Numéro de dépôt: 93401916.7
(22) Date de dépôt: 23.07.1993
(51) Int. Cl.: G07F 11/68, A47J 37/12

(54) **Appareil de distribution automatique de produits alimentaires**
Vorrichtung zur automatischen Ausgabe von Nahrungsmitteln
Apparatus for automatically dispensing foodstuffs

(30) Priorité: 29.07.1992 FR 9209360
(43) Date de publication de la demande: 02.02.1994
(73) Titulaire: Cailbault, Christian Jean Gérard, F-85100 Le Château d'Olonne (FR)
(72) Inventeur: Cailbault, Christian Jean Gérard, F-85100 Le Château d'Olonne (FR)
(74) Mandataire: CABINET BONNET-THIRION

(56) Documents cités:
- WO-A-89/12417
- FR-A- 1 156 814
- GB-A- 1 081 403
- US-A- 3 224 361
- US-A- 3 298 567
- US-A- 3 340 789
- US-A- 3 817 422
- US-A- 3 984 030
- US-A- 4 008 657
- US-A- 4 146 150

## Description

L'invention se rapporte à un appareil de distribution automatique de produits alimentaires et concerne plus particulièrement un agencement nouveau permettant de distribuer des portions de tels produits alimentaires chauds, sans intervention de personnel. Un domaine d'application privilégié de l'invention concerne la distribution de pommes de terre cuisinées, notamment sous forme de frites.

La distribution automatique de plats chauds dans les lieux publics se heurte à de nombreux problèmes, notamment lorsqu'il s'agit de produits alimentaires nécessitant traditionnellement une cuisson par friture dans l'huile, comme par exemple des frites. L'un des problèmes à résoudre est celui de l'entretien du bain de friture, le contrôle de la cuisson et le contrôle de la proportion de matière grasse de cuisson, laissée dans les produits alimentaires distribués. Pratiquement, à l'heure actuelle, il est impossible d'envisager une distribution entièrement automatique de tels produits alimentaires chauds. Il est également difficile de garantir une qualité constante des produits distribués, même si la cuisson et la distribution sont surveillées par un employé. En revanche, on peut facilement envisager des unités de production importantes dans lesquelles les qualités des produits et les conditions de cuisson sont étroitement surveillées par des spécialistes, de façon à proposer des produits de qualité constante, préparés de façon à conserver le plus possible leurs qualités organoleptiques. En particulier, dans le cas de frites, il est possible de contrôler très étroitement la qualité de la cuisson et le degré de matière grasse toléré dans les pommes de terre cuites. On sait également emballer de tels produits précuits, en mettant en oeuvre des moyens tels que les qualités organoleptiques puissent être maintenues pendant une période de temps relativement longue.

Le document US 3 340 789 décrit un distributeur de produits alimentaires en sachets dans lequel les produits sont réchauffés dans de l'eau chaude avant d'être transférés vers un poste d'ouverture des sachets.

L'invention propose un agencement nouveau permettant d'envisager la distribution automatique de produits précuits, susceptibles d'être servis chauds, sans intervention humaine.

Plus précisément, l'invention concerne un appareil de distribution automatique de produits alimentaires emballés de façon à constituer des rations individualisées, lesdites rations étant enfermées dans des emballages respectifs rattachés les uns aux autres de façon à constituer une sorte de chaîne, du type comportant des moyens pour entraîner ladite chaîne et la faire circuler le long d'un trajet prédéterminé, des moyens d'ouverture desdits emballages agencés en un emplacement prédéterminé le long dudit trajet, un réceptacle agencé pour recevoir chaque fois une ration provenant d'un emballage ouvert et des moyens de chauffage, caractérisé en ce que lesdits moyens de chauffage sont associés audit réceptacle et en ce que ce dernier comporte ou est associé à un mécanisme d'évacuation permettant de transférer ladite portion réchauffée à un emplacement où se trouve un récipient.

Les différents moyens énoncés ci-dessus sont actionnés séquentiellement, par exemple par des moteurs et/ou vérins eux-mêmes mis en oeuvre à partir du signal de commande émis par un récepteur de monnaie, de tickets, un lecteur de carte, ou autre.

Les composants électrotechniques mis en oeuvre pour actionner séquentiellement les divers moyens énoncés sont considérés comme connus de l'homme du métier mais leur assemblage est globalement nouveau. Plusieurs moyens de chauffage peuvent être utilisés dans un tel appareil. On préférera souvent un chauffage par air chaud. Un chauffage par induction est également possible.

Selon un mode de réalisation plus particulièrement envisagé, lesdits emballages seront constitués par de simples sachets rattachés bout-à-bout et les moyens d'ouverture comprendront un organe de découpage placé sur le trajet de ladite chaîne de façon à ouvrir les sachets au-dessus du réceptacle. Dans un tel appareil, il est nécessaire de prévoir une pile de barquettes vides et un distributeur acheminant ces barquettes, l'une après l'autre, vers un emplacement où sont déversées successivement des portions après qu'elles aient été soumises à l'action des moyens de chauffage.

Selon un autre mode de réalisation, les emballages constituant ladite chaîne sont des barquettes réunies entre elles par une bande "pelable" définissant les couvercles de toutes lesdites barquettes de ladite chaîne. Dans ces conditions, les moyens d'ouverture sont agencés pour opérer le décollage de ladite bande "pelable", dans des conditions telles que, d'une part, les produits alimentaires soient déversés dans le réceptacle pour être soumis à l'action des moyens de chauffage et que, d'autre part, lesdites barquettes devenues indépendantes soient acheminées vers un emplacement où elles peuvent recevoir des produits alimentaires réchauffés.

Dans ces conditions, les barquettes qui ont servi au conditionnement et à la conservation des produits alimentaires sont réutilisées pour présenter la nourriture chaude au consommateur. Il n'est plus nécessaire de prévoir une réserve de barquettes vides dans le dispositif lui-même.

L'invention sera mieux comprise et d'autres avantages de celle-ci apparaîtront plus clairement à la lumière de la description qui va suivre de deux modes de réalisation d'un appareil de distribution de produits alimentaires conforme à son principe, donnée uniquement à titre d'exemple et faite en référence aux dessins non limitatifs annexés dans lesquels:
- la figure 1 est une vue schématique en élévation d'un premier mode de réalisation d'un appareil de distribution conforme à l'invention;
- la figure 2 est une vue analogue à la figure 1 illustrant une variante; et
- les figures 3 et 4 illustrent une chaîne de barquettes utilisable avec l'appareil de la figure 2, respectivement pliée dans un emballage et dépliée.

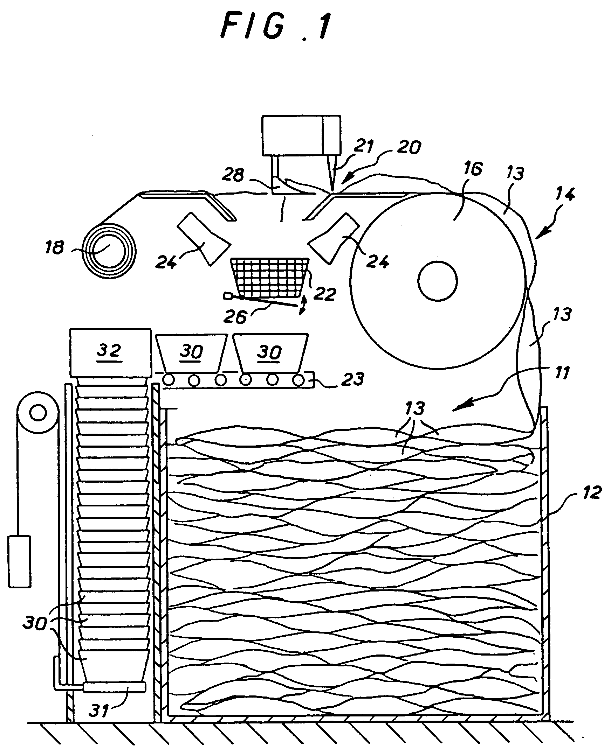

L'appareil de distribution automatique de produits alimentaires tel que représenté sur la figure 1 comporte un logement 11 destiné à recevoir un conteneur 12, par exemple en carton, renfermant un certain nombre de rations, ici des rations de frites, enfermées dans des emballages 13 respectifs rattachés les uns aux autres de façon à constituer une sorte de chaîne 14.

Dans l'exemple, les rations sont précuites et conditionnées sous la forme indiquée dans une unité industrielle où des équipements performants permettent de garantir des conditions de cuisson et de conditionnement optimales. Lorsqu'un conteneur 12 renfermant un certain nombre de rations est mis en place dans l'appareil de distribution, l'opérateur engage la chaîne sur un tambour d'entraînement 16 et rattache l'extrémité libre de celle-ci à un tambour d'enroulement 18 destiné à récupérer en continu ce qui reste des emballages après leur ouverture et l'extraction des produits alimentaires. Grâce aux tambours 16, 18, la chaîne d'emballage est donc assujettie à se déplacer le long d'un trajet 20 prédéterminé, ici essentiellement horizontal. Des moyens d'ouverture 21 des emballages sont agencés le long de ce trajet.

Dans l'exemple de la figure 1, les emballages 13 ont la forme de simples sachets agencés en chapelet de sorte que les moyens d'ouverture peuvent être constitués par un simple organe de découpage tel qu'une lame ou analogue, placé de façon à ouvrir longitudinalement les sachets au fur et à mesure que ceux-ci progressent le long dudit trajet. L'organe de découpage est placé de telle sorte que l'ouverture d'un sachet entraîne la chute des frites dans un réceptacle 22. L'avance de la chaîne se fait séquentiellement de façon que le réceptacle ne reçoive qu'une ration à la fois. Des moyens de chauffage 24 sont associés au réceptacle. Il s'agit ici de moyens de chauffage à air chaud dont on a représenté deux buses d'éjection d'air chaud dirigées vers le réceptacle. Ce dernier comporte ou est associé à un mécanisme d'évacuation 26 permettant de transférer la portion de frites réchauffées à un emplacement où se trouve un récipient accessible pour un consommateur. Plus précisément, dans l'exemple représenté, le réceptacle comprend un fond ouvrant commandé (par un système d'électro-aimant ou analogue, non représenté) formant partie dudit mécanisme d'évacuation.

En outre, pour faciliter la chute des frites dans le réceptacle, des déflecteurs 28 sont agencés au-dessus dudit réceptacle pour écarter les deux parties de la chaîne d'emballages résultant du découpage longitudinal des sachets.

Dans ces conditions, le tambour de réenroulement 18 permet de récupérer les restes des sachets rattachés bout-à-bout et vidés de leur contenu. Un système de traction par friction peut être agencé en amont du tambour 18 lequel n'est pas indispensable. L'appareil de distribution est complété par une pile de barquettes vides 30 installée entre un socle 31 mobile verticalement et un distributeur-dépileur 32, connu en soi, acheminant les barquettes une à une le long d'un guide horizontal 33 jusqu'à un emplacement situé sous le réceptacle 22, où chaque barquette peut recevoir une portion de frites chaudes.

Bien entendu, cet emplacement se trouve en regard d'une ouverture pratiquée dans le boîtier de l'appareil et permettant au consommateur de prendre possession de la barquette remplie d'une ration.

L'entretien d'un appareil de distribution conforme à la description qui précède ne nécessite que l'approvisionnement périodique d'un conteneur 12 renfermant une chaîne de sachets et d'une pile de barquettes vides 30.

Bien entendu, à chaque réapprovisionnement, le tambour de réenroulement 18 est débarrassé des restes des sachets vides. Pour faciliter cette opération, le tambour 18 est un moyeu extensif permettant de recevoir un tube en carton jetable sur lequel s'enroulent lesdits sachets.

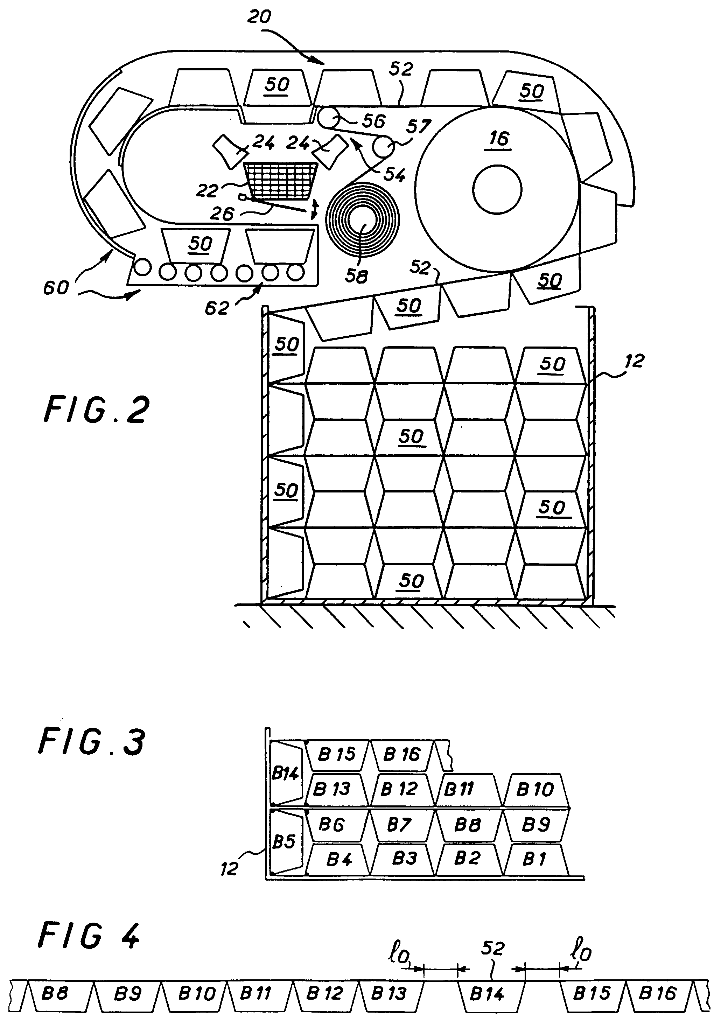

Sur la figure 2, les éléments de structure analogues à ceux de la figure 1 portent les mêmes références numériques. On retrouve un tambour d'entraînement 16, un réceptacle 22, un mécanisme d'évacuation 26 et des moyens de chauffage à air chaud 24. En revanche, le conteneur est rempli d'une chaîne 14a d'emballages constituée par des barquettes 50 réunies entre elles par une bande dite "pelable" 52, par exemple thermocollée et définissant les couvercles de toutes les barquettes de la chaîne. Les moyens d'ouverture de ces conteneurs comprennent essentiellement un mécanisme de décollement 54 de la bande "pelable", agencés en amont du réceptacle 22, le long du trajet 20 des barquettes. Plus précisément, ce mécanisme constitue des moyens des réenroulement de la bande "pelable" 52 comprenant un rouleau de décollage 56, situé au voisinage immédiat du réceptacle 22 et au-dessus de celui-ci, un rouleau de guidage 57 et un rouleau d'enroulement 58. Bien entendu, ladite chaîne d'emballages est installée sur le tambour d'entraînement, de telle sorte que lesdites barquettes parviennent en position renversée au voisinage des moyens d'ouverture précités et au-dessus du réceptacle, comme cela est visible sur le dessin. L'appareil est complété par des moyens de guidage et/ou d'entraînement 60 desdites barquettes, les prenant en charge lorsqu'elles sont désolidarisées les unes des autres après le décollement de la bande "pelable". Ces moyens de guidage et/ou d'entraînement sont agencés entre les moyens d'ouverture et plus particulièrement le rouleau de décollement 56 et un emplacement 62 situé en-dessous du mécanisme d'évacuation 26, c'est-à-dire ici en-dessous du réceptacle 22, pour que chaque barquette parvenue à cet emplacement soit en mesure de récupérer une ration de produits alimentaires réchauffés. Bien entendu, cet emplacement est accessible par le consommateur qui peut prendre possession de la barquette.

Ce mode de réalisation se distingue donc avantageusement du précédent en ce qu'il n'est plus nécessaire d'approvisionner l'appareil avec des barquettes vides.

Par ailleurs, les barquettes 50 peuvent être réunies entre elles par ladite bande "pelable" 52, d'une façon qui optimalise leur rangement dans un conteneur en forme de parallélépipède rectangle et facilite le déroulement de ladite chaîne entraînée par le tambour d'entraînement 16.

Ainsi, les barquettes de la chaîne d'emballages sont agencées par groupes espacés longitudinalement les uns des autres par des tronçons lₒ de ladite bande "pelable" 52, comme illustré aux figures 3 et 4. Plus précisément, on prévoit des barquettes sensiblement deux fois plus longues que hautes. La longueur du conteneur 12 est telle qu'on puisse y loger un nombre entier de barquettes horizontalement plus une barquette verticalement. De ce fait, la chaîne de barquettes est telle qu'elle se trouve constituée de groupes comprenant des barquettes articulées bord à bord B₁-B₄, B₆-B₁₃... par ladite bande "pelable", deux tels groupes étant séparés par une barquette B₅ ou B₁₄, raccordée à chaque groupe par une longueur lₒ suffisante de ladite bande "pelable", comme représenté. Ceci permet de définir des couches régulières de barquettes dans le conteneur et permet de loger le plus grand nombre de barquettes dans un espace donné tout en facilitant le déroulement de la chaîne de barquettes, une fois que celle-ci est engagée sur le tambour d'entraînement et que la bande "pelable" est raccordée aux moyens d'enroulement.

Dans chaque conteneur 12 ladite chaîne de barquettes ou sachets comporte une bande à chaque extrémité. La bande de fin de chaîne est accessible pour permettre son raccordement à la bande amorce de début du conteneur suivant. On peut ainsi réapprovisionner l'appareil avant que le conteneur en service soit vide. On peut compléter l'appareil de façon à gérer le déroulement de plusieurs chapelets contenant des produits alimentaires différents dont certains pourront être réchauffés. A titre d'exemple, on peut prévoir la distribution de saucisses conjointement ou non avec la distribution de frites. On peut aussi prévoir la distribution de sachets de produits d'assaisonnement de préférence également en chapelets. Du sel peut être versé au niveau du réceptacle au moyen d'une buse commandée en fin de chauffage. D'autres variantes sont possibles. En particulier, le réceptacle peut être monté vibrant ou oscillant. Au lieu de comporter un fond ouvrant, il pourrait être monté basculant pour l'évacuation des produits alimentaires. Enfin, les emballages (13, 50) pourraient être conservés dans une unité de congélation ou au moins réfrigérée.

## Revendications

1. Appareil de distribution automatique de produits alimentaires emballés de façon à constituer des rations individualisées, lesdites rations étant enfermées dans des emballages (13, 50) respectifs rattachés les uns aux autres de façon à constituer une sorte de chaîne, du type comportant des moyens (16) pour entraîner ladite chaîne et la faire circuler le long d'un trajet prédéterminé, des moyens d'ouverture (21, 56) desdits emballages agencés en un emplacement prédéterminé le long dudit trajet, un réceptacle (22) agencé pour recevoir chaque fois une ration provenant d'un emballage ouvert et des moyens de chauffage (24), caractérisé en ce que lesdits moyens de chauffage sont associés audit réceptacle et en ce que ce dernier comporte ou est associé à un mécanisme d'évacuation (26) permettant de transférer ladite portion réchauffée à un emplacement où se trouve un récipient.

2. Appareil de distribution selon la revendication 1, caractérisé en ce que lesdits moyens de chauffage (24) sont des moyens de chauffage par air chaud comprenant au moins une buse d'éjection d'air chaud dirigée vers ledit réceptacle.

3. Appareil de distribution selon la revendication 1 ou 2, caractérisé en ce que ledit réceptacle (22) comprend un fond ouvrant commandé (26), formant partie dudit mécanisme d'évacuation.

4. Appareil de distribution selon l'une des revendications précédentes, caractérisé en ce que lesdits emballages ont la forme de sachets (13) rattachés bout-à-bout et que lesdits moyens d'ouverture comprennent un organe de découpage (21) tel qu'une lame ou analogue, agencé au voisinage et au-dessus dudit réceptacle (22) pour ouvrir longitudinalement lesdits sachets.

5. Appareil de distribution selon la revendication 4, caractérisé en ce que lesdits moyens d'ouverture comportent en outre des déflecteurs (28) agencés au-dessus dudit réceptacle pour écarter les deux parties de ladite chaîne d'emballages résultant du découpage longitudinal desdits sachets et favoriser la chute des produits alimentaires dans ledit réceptacle (22).

6. Appareil de distribution selon la revendication 5, caractérisé en ce qu'il comporte, en aval desdits moyens d'ouverture, un tambour de réenroulement (18) desdits sachets rattachés bout-à-bout et vidés de leur contenu.

7. Appareil de distribution selon l'une des revendications 1 à 3, caractérisé en ce que lesdits emballages sont constitués de barquettes (50) réunies entre elles par une bande (52) définissant les couvercles de toutes lesdites barquettes de ladite chaîne et en ce que lesdits moyens d'ouverture desdits conteneurs comprennent un mécanisme de décollement (56) de ladite bande, agencé en amont dudit réceptable (22) le long dudit trajet.

8. Appareil de distribution selon la revendication 7, caractérisé en ce que lesdits moyens d'ouverture comprennent des moyens de réenroulement (58) de ladite bande.

9. Appareil de distribution selon la revendication 7 ou 8, caractérisé en ce que ladite chaîne est entraînée le long dudit trajet de telle sorte que lesdites barquettes (50) parviennent en position renversée au voisinage desdits moyens d'ouverture (56) et au-dessus dudit réceptacle (22).

10. Appareil de distribution selon l'une des revendications 7 à 9, caractérisé en ce qu'il comprend des moyens de guidage et/ou d'entraînement (60) desdites barquettes agencés entre les moyens d'ouverture (56) et un emplacement (62) situé en-dessous desdits moyens d'évacuation, pour récupérer des rations de produits alimentaires réchauffés dans ces mêmes barquettes, respectivement.

## Patentansprüche

1. Vorrichtung zur automatischen Ausgabe von Nahrungsmitteln, die zur Bildung von individualisierten Rationen verpackt sind, wobei die Rationen in Verpackungen (13, 50) eingeschlossen sind, die jeweils zur Bildung einer Art von Kette miteinander verbunden sind, mit folgenden Merkmalen:
Mittel (16) zum Antrieb der Kette und zum Umlauf entlang einer vorbestimmten Bahn;
Mittel (21, 56) zum Öffnen der Verpackungen, die an einer vorbestimmten Stellen entlang der Bahn angebracht sind;
ein Auffänger (22), der zur Aufnahme einer Ration angeordnet ist, die jedes Mal aus einer geöffneten Verpackung stammt, und
Heizeinrichtungen (24),
dadurch gekennzeichnet,
daß die Heizeinrichtungen dem Auffänger zugeordnet sind, und daß dieser eine Evakuierungseinrichtung (26) aufweist oder einer solchen zugeordnet ist, die den Transport der aufgewärmten Portion an einer Stelle ermöglicht, an der sich ein Aufnahmebehälter befindet.

2. Ausgabevorrichtung nach Anspruch 1,
dadurch gekennzeichnet,
daß die Heizeinrichtungen (24) Warmluftheizungen darstellen, die mindestens eine Düse zur Abgabe heißer Luft aufweisen, welche auf den Auffänger gerichtet wird.

3. Ausgabevorrichtung nach Anspruch 1 oder 2,
dadurch gekennzeichnet,
daß der Auffänger (22) einen gesteuerten Öffnungsboden (26) umfaßt, der Teil der Evakuierungseinrichtung ist.

4. Ausgabevorrichtung nach einem der vorhergehenden Ansprüche,
dadurch gekennzeichnet,
daß die Verpackungen in Form von Beutel (13) vorliegen, die mit ihren Enden verbunden sind, und daß die Öffnungseinrichtungen ein Abschneidorgan (21), in Form von Klingen oder dergleichen umfassen, das in der Nähe und unterhalb des Auffängers (22) angeordnet ist, um die Beutel in Längsrichtung zu öffnen.

5. Ausgabevorrichtung nach Anspruch 4,
dadurch gekennzeichnet,
daß die Öffnungseinrichtungen Leitbleche (28) aufweisen, die oberhalb des Auffängers angeordnet sind, um die beiden Teile der Verpackungskette zu spreizen, die von dem Längsschnitt der Beutel resultieren, und um das Herunterfallen der Lebensmittel in den Auffänger (22) zu begünstigen.

6. Ausgabevorrichtung nach Anspruch 5,
dadurch gekennzeichnet,
daß er einen den Öffnungseinrichtungen nachgeschaltete Aufwickeltrommel (18) für die Beutel aufweist, die mit ihren Enden aneinandergeliegen und hinsichtlich ihres Inhalts entleert worden sind.

7. Ausgabevorrichtung nach einem der Ansprüche 1 bis 3,
dadurch gekennzeichnet,
daß die Packungen aus Schiffchen (50) gebildet werden, die durch ein Band (52) miteinander verbunden sind, welches die Deckel aller Schiffchen der Kette bildet, und daß die Öffnungseinrichtungen dieser Behälter eine Abhebevorrichtung (56) des Bandes umfaßt, die in Fließrichtung vor dem Behälter (22) entlang der Bahn angeordnet ist.

8. Ausgabevorrichtung nach Anspruch 7,
dadurch gekennzeichnet,
daß die Öffnungseinrichtungen Mittel zum Wiederaufwickeln (58) des Bandes umfassen.

9. Ausgabevorrichtung nach Anspruch 7 oder 8,
dadurch gekennzeichnet,
daß die Kette entlang der Bahn derart gezogen wird, daß die Schiffchen (50) in umgekehrter Stellung in die Nähe der Öffnungseinrichtungen (56) und oberhalb des Auffängers (22) gelangen.

10. Ausgabevorrichtung nach einem der Ansprüche 7 bis 9,
dadurch gekennzeichnet,
daß sie Führungs- und/oder Mitnahmeeinrichtungen (60) der Schiffchen umfassen, die zwischen den Öffnungseinrichtungen (56) und einer Stelle (62) angeordnet sind, welche unterhalb der Evakuationseinrichtung gelegen ist, um die Rationen der erwärmten Lebensmittel in den jeweils gleichen Schiffchen aufzunehmen.

## Claims

1. An apparatus for the automatic distribution of packaged foodstuff products so as to constitute individualised rations, said rations being enclosed in respective packagings (13, 50) which are attached to each other so as to constitute a kind of chain, of the type comprising means (16) for entraining said chain and circulating it along a predetermined path of movement, means (21, 56) for opening said packagings which are arranged at a predetermined location along said path of movement, a receptacle (22) arranged to receive each time a ration coming from an open packaging and heating means (24), characterised in that said heating means are associated with said receptacle and that the latter comprises or is associated with a discharge means (26) permitting transfer of said heated portion to a location where there is a receiver.

2. A distribution apparatus according to claim 1 characterised in that said heating means (24) are hot air heating means comprising at least one hot air ejection nozzle directed towards said receptacle.

3. A distribution apparatus according to claim 1 or claim 2 characterised in that said receptacle (22) comprises a controlled openable bottom (26) forming part of said discharge mechanism.

4. A distribution apparatus according to one of the preceding claims characterised in that said packagings are in the form of bags (13) which are attached in end-to-end relationship and that said opening means comprise a cutting member (21) such as a blade or the like arranged in the proximity of and above said receptacle (22) for longitudinally opening said bags.

5. A distribution apparatus according to claim 4 characterised in that said opening means further comprise deflectors (28) arranged above said receptacle for moving apart the two parts of said chain of packagings resulting from longitudinal cutting of said bags and promote the drop of the foodstuff products into said receptacle (22).

6. A distribution apparatus according to claim 5 characterised in that, downstream of said opening means, it comprises a drum (18) for re-winding said bags which are attached in end-to-end relationship and which have been emptied of their contents.

7. A distribution apparatus according to one of claims 1 to 3 characterised in that said packagings are formed by boat-like dishes (50) which are connected together by a strip (52) defining the covers of all said dishes of said chain and that said means for opening said containers comprise a mechanism (56) for detaching said strip arranged upstream of said receptacle (22) along said path of movement.

8. A distribution apparatus according to claim 7 characterised in that said opening means comprise means (58) for re-winding said strip.

9. A distribution apparatus according to claim 7 or claim 8 characterised in that said chain is entrained along said path of movement in such a way that said dishes (50) arrive in an inverted position in the proximity of said opening means (56) and above said receptacle (22).

10. A distribution apparatus according to one of claims 7 to 9 characterised in that it comprises means (60) for guiding and/or entraining said dishes, said means being disposed between the opening means (65) and a location (62) disposed below said evacuation means for recovering rations of foodstuff products heated in said dishes respectively.
